# EUROPEAN PATENT APPLICATION

(11) **EP 2 610 228 A1**
(43) Date of publication of application: **03.07.2013**
(21) Application number: 11196142.1
(22) Date of filing: 30.12.2011
(51) Int. Cl.: C04B 28/36, C04B 40/00

(54) **Sulphur cement pre-composition and process for preparing such sulphur cement pre-composition**

(71) Applicant: Shell Internationale Research Maatschappij B.V., 2596 HR The Hague (NL)
(72) Inventor: Lankshear, Michael David, 1031 HW Amsterdam (NL); Smura, Catherine Frances, 1031 HW Amsterdam (NL); Verbist, Guy Lode Magda Maria, 1031 HW Amsterdam (NL); Verbruggen, Marloes, 5612 AZ Eindhoven (NL); Weijers, Cees, 5612 AZ Eindhoven (NL)
(74) Representative: Matthezing, Robert Maarten

(57) **Abstract**

The invention provides a process for the preparation of a sulphur cement pre-composition comprising reacting sulphur modifier with polysulphide-containing organosilane to obtain in the presence of sulphur the sulphur cement pre-composition, wherein the organosilane has the general molecular formula:

(X₃Si)ₘH₍₂ₙ₊₁₎Cₙ-Sₐ-C_{n'}H_{(2n'+1-m')} (SiX'₃)_{m'} (1)

wherein a is an integer in the range of from 2 to 8, X and X' each are, independently, a hydrolysable group, n and n' each are, independently, an integer in the range of from 1 to 4, and m and m' each are, independently, an integer in the range of from 1 to (2n+1).

## Description

### Field of the Invention

The present invention provides a sulphur cement pre-composition and a process for the preparation of a sulphur cement pre-composition. The invention further provides a process for the preparation of a sulphur cement product, a sulphur cement product and the use of such sulphur cement pre-composition in sulphur cement sulphur mortar or sulphur concrete.

### Background of the Invention

Sulphur cement generally refers to a product comprising at least sulphur and a filler. To improve the properties of the sulphur cement, the sulphur may be modified using a sulphur modifier. Such modifiers are known in the art. Usual sulphur cement fillers are particulate inorganic materials.

Sulphur cement-aggregate composites generally refer to a composite comprising both sulphur cement and aggregate. Examples of sulphur cement-aggregate composites are sulphur mortar, sulphur concrete and sulphur-extended asphalt. Sulphur-extended asphalt is asphalt, i.e. typically aggregate with a binder that contains filler and a residual hydrocarbon fraction, wherein part of the binder has been replaced by sulphur, usually modified sulphur.

It is known to use organosilane compounds as a stabilising agent in sulphur cement or sulphur cement-aggregate compositions to improve water stability. In US 4,164,428 for example, a modified sulphur composition (often referred to a plasticized sulphur composition) comprising at least 50% by weight of sulphur, a sulphur modifier (often referred to a sulphur plasticizer), a finely divided particulate mineral suspending agent, and an organosilane stabilising agent is disclosed. It is mentioned that suitable organosilanes have the general molecular formula R-Si(OR')₃, wherein R' is a low molecular weight alkyl group and R is an organic radical having at least one functional group, usually bonded to the silicon atom by a short alkyl chain. Gamma-mercaptopropyltrimethoxysilane is mentioned as a preferred organosilane.

In US 2010/0242807 A1, the preparation of a sulphur cement pre-composition has been described which sulphur cement pre-composition comprises sulphur and a polysulphide-containing organosilane, which organosilane has the general molecular formula:

(X₃Si)ₘH₍₂ₙ₊₁₋ₘ₎Cₙ-Sₐ-C_{n'}H_{(2n'-1-m'}) (SiX'₃)_{m'} (1)

wherein a is an integer in the range of from 2 to 8, X and X' each are, independently, a hydrolysable group, n and n' each are, independently, an integer in the range of from 1 to 4, and m and m' each are, independently, an integer in the range of from 1 to (2n+1). The sulphur cement pre-composition is prepared by admixing sulphur with the polysulphide-containing organosilane in an amount of at least 0.3 wt% based on the weight of the total composition. In general terms it has been mentioned that the sulphur cement pre-composition may also comprise a sulphur modifier. However, such sulphur modifier is normally admixed with the sulphur cement pre-composition at a later stage when the latter is mixed with particulate inorganic material to form the sulphur cement product (see [0036] of the same document).

Although the sulphur cement product so obtained displays attractive properties in terms of durability, there is, however, still room in approving the process for preparing the sulphur cement pre-composition.

A problem associated with the production of sulphur cement products is that the sulphur cement pre-composition is normally prepared at a often distant refinery or chemical plant after which the sulphur cement pre-composition prepared needs to be transported to a cement plant where the actual sulphur cement product for commercial use is made. In view of transportation costs, it is desired to minimize the amount of sulphur cement pre-composition to be transported. In other words there is a need to improve the efficiency of the sulphur cement pre-composition, allowing the use of smaller master batches and smaller amounts of sulphur pre-composition to be transported for the production of a similar quantity of final sulphur cement product.

In addition, it is desired to optimize the overall efficiency of the sulphur cement pre-composition manufacturing process in terms of reaction kinetics.

### Summary of the Invention

It has now been found that this can be established when sulphur modifier reacts with the polysulphide-containing organosilane in the presence of sulphur.

Accordingly, the present invention relates to a process for the preparation of a sulphur cement pre-composition comprising reacting sulphur modifier with polysulphide-containing organosilane to obtain in the presence of sulphur the sulphur cement pre-composition, wherein the organosilane has the general molecular formula:

(X₃Si)ₘH₍₂ₙ₊₁₋ₘ₎Cₙ-Sₐ-C_{n'}H_{(2n'+1-m')} (SiX'₃)_{m'} (1)

wherein a is an integer in the range of from 2 to 8, X and X' each are, independently, a hydrolysable group, n and n' each are, independently, an integer in the range of from 1 to 4, and m and m' each are, independently, an integer in the range of from 1 to (2n+1).

The present process improves the miscibility of the polysulphide-containing organosilane, allowing the sulphur cement pre-composition to contain higher concentrations of polysulphide-containing organosilane and smaller amounts of sulphur. This enables the use of smaller master batches, whereas at the same time smaller amounts of a more concentrated and thus effective sulphur cement pre-composition can be transported to sulphur cement production plants. In addition, it has been found that the reaction between sulphur modifier and polysulphide-containing organosilane accelerates the modification of sulphur, allowing the sulphur cement pre-composition to be formed more efficiently at the same temperature or the application of a lower mixing temperature as such. Hence, also the reaction kinetics of the sulphur cement pre-composition are attractively improved in accordance with the present invention.

The invention in a further aspect provides a sulphur cement pre-composition obtainable by a process for the preparation of the sulphur cement pre-composition according to the invention. The sulphur cement pre-composition is as such novel since a co-product of the sulphur modifier and polysulphide-containing organosilane appears to be formed, resulting in an elongated polysulphide-containing organosilane molecule. This is due to the fact that the bridge between the two organosilyl groups in the polysulphide-containing organosilane has been elongated, as can be shown by NMR spectroscopy. Without being bound to any particular theory it is believed that the elongation of said bridge is to the incorporation into the brigde of sulphur and/or sulphur modifier.

The invention in a further aspect provides a process for the preparation of a sulphur cement product comprising the following steps:
(a) admixing at least a sulphur cement pre-composition according to the invention and a particulate inorganic material at a temperature at which sulphur is molten to obtain a molten sulphur cement product; and
(b) solidifying the molten sulphur cement product.

The invention in a still further aspect provides a sulphur cement product obtainable by a process for the preparation of the sulphur cement product according to the invention.

The invention in another aspect provides the use of a sulphur cement pre-composition according to the invention in sulphur cement, sulphur mortar, sulphur concrete or sulphur-extended asphalt.

Reference herein to a sulphur cement pre-composition is to a composition, which after addition of at least one of sulphur or a particulate inorganic material forms a sulphur cement product, e.g. a sulphur cement, a sulphur mortar, sulphur concrete and sulphur-extended asphalt.

### Detailed description of the invention

In accordance with the present invention the sulphur modifier and polysulphide-containing organosilane are reacted together in the presence of sulphur.

Suitably, in the present process (a) at least part of the sulphur is admixed with at least part of the polysulphide-containing organosilane and at least part of the sulphur modifier; (b) at least part of the sulphur modifier is admixed with at least part of the polysulphide-containing organosilane and the mixture so obtained is admixed with the sulphur ; (c) at least part of the polysulphide-containing organosilane is admixed with at least part of the sulphur and the mixture so obtained is admixed with the sulphur modifier; or (d) at least part of the sulphur is admixed with at least part of the sulphur modifier and the mixture so obtained is admixed with the polysulphide-containing organosilane.

Preferably, in the present process (a) at least part of the sulphur is admixed with at least part of the polysulphide-containing organosilane and at least part of the sulphur modifier; (b) at least part of the sulphur is admixed with at least part of the polysulphide-containing organosilane and the mixture so obtained is admixed with the sulphur modifier; or (c) at least part of the polysulphide-containing organosilane is admixed with at least part of the sulphur modifier and the mixture so obtained is admixed with the sulphur.

More preferably, in the present process (a) at least part of the sulphur is admixed with at least part of the polysulphide-containing organosilane and at least part of the sulphur modifier; or (b) at least part of the sulphur modifier is admixed with at least part of the polysulphide-containing organosilane and the mixture so obtained is admixed with the sulphur.

Most preferably, in the present process at least part of the sulphur is admixed with at least part of the polysulphide-containing organosilane and at least part of the sulphur modifier. This means that most preferably at least part of the sulphur to be used is simulateously admixed with at least part of the polysulphide-containing organosilane to be used and at least part of the sulphur modifier to be used.

In a particularly attractive embodiment of the present invention in a first step the sulphur and the sulphur modifier and at least part of the polysulphide-containing organosilane are admixed and in a second step the mixture so obtained is admixed with the remaining part of the polysulphide-containing organosilane. This particular embodiment has the major advantage that in the first step only a very small amount of the polysulphide-containing organosilane needs to be used to bring about a considerable acceleration in the modification of the sulphur, whereas the overall process allows for a very high concentration of the polysulphide-containing organisilane in the sulphur cement pre-composition.

In the present invention use is made of a polysulphide-containing organosilane having the general molecular formula:

(X₃Si)ₘH₍₂ₙ₊₁₋ₘ₎Cₙ-Sₐ-C_{n'}H_{(2n'+1-m'}) (SiX'₃)_{m'} (1)

In general molecular formula (1), a is an integer in the range of from 2 to 8, preferably of from 2 to 6. X and X' each are, independently, a hydrolysable group, preferably a halogen, alkoxy, acyloxy or aryloxy group, more preferably a lower alkoxy group, even more preferably an alkoxy group with 1 to 4 carbon atoms, for example methoxy or ethoxy, n and n' each are, independently, an integer in the range of from 1 to 4, and m and m' each are, independently, an integer in the range of from 1 to (2n+1). Preferably n has the same value as n' and m preferably has the same value as m'. Preferably, m and m' both are 1 or 2, more preferably both m and m' are 1. X is preferably the same hydrolysable group as X'. Particularly preferred organosilanes are bis (3-triethoxysilylpropyl) tetrasulphide, bis (3- trimethoxysilylpropyl) disulphide, bis (3-trimethoxysilylpropyl) trisulphide, bis (3-trimethoxysilylpropyl) tetrasulphide. Most preferred is bis (3-triethoxysilylpropyl) tetrasulphide.

Suitably, in the present process the polysulphide-containing organosilane is present in amount in the range of from of 0.001-5, preferably in the range of from 0.01-2 wt%, and more preferably in the range of from 0.05-1 wt%, based on the total weight of the sulphur cement pre-composition.

Suitably, in the present process sulphur modifier is present in amount in the range of from 0.0001-10, preferably in an amount in the range of from 0.002-5 wt%, more preferably in an amount in the range of from 0.01-0.2 wt%, based on the total weight of the sulphur cement pre-composition.

Suitably, in the present process sulphur is present in an amount of at least 90 wt%, based on the total weight of the sulphur cement pre-composition.

When used at a cement plant, the present sulphur cement pre-composition may suitably be added in such amounts to an inorganic material that the need for stabilising agent is immediately satisfied. The sulphur cement product may be completed by adding additional sulphur. The sulphur cement pre- composition is typically solid under ambient conditions, in contrast to the generally liquid polysulphide-containing organosilane.

In the present process use is made of sulphur modifier. Such modifiers are known in the art. Examples of such modifiers are aliphatic or aromatic polysulphides or compounds that form polysulphides upon reaction with sulphur. Examples of compounds that form polysulphides are naphthalene or olefinic compounds such as 5-ethylidene-2-norbornene (ENB) or 5-vinyl-2-norbornene (VNB), dicyclopentadiene, limonene or styrene.

In accordance with the present invention the sulphur modifier is preferably styrene or a derivative thereof. The use of styrene or a derivative thereof improves the miscibility of the polysulphide-containing organosilane. Suitable derivatives of styrene include α-methylstyrene, divinyl benzene,4-bromo styrene , and 4-hydroxy styrene

The sulphur cement pre-compositions according to the invention may be used in solid or molten state, for instance to prepare a sulphur cement product.

In accordance with the present invention, the polysulphide-containing organosilane may first be dissolved in a small amount of solvent, for example an alcohol or a hydrocarbon, in order to facilitate the admixing with sulphur modifier and sulphur. The solvent preferably has a boiling point such it evaporates during the admixing step.

Preferably, in the process for the preparation of the sulphur cement pre-composition the sulphur modifier, polysulphide-containing organosilane and sulphur are admixed at a temperature at which sulphur is molten. Alternatively, the obtained sulphur cement pre-composition is heated and mixed at a temperature at which the sulphur is molten. The temperature at which sulphur is molten is typically above 118°C, preferably in the range of from 120 to 150 °C, more preferably in the range of from 125 to 140°C. Mixing at temperatures at which the sulphur is molten may provide a homogeneous distribution of the polysulphide-containing organosilane in the sulphur. In case the sulphur and polysulphide-containing organosilane are admixed at a temperature at which sulphur is molten or the obtained sulphur cement pre- composition is heated and mixed at a temperature at which the sulphur is molten, the obtained sulphur cement pre-composition may be cooled to a temperature at which the sulphur solidifies. The solid sulphur cement pre-composition can be easily stored or transported.

As mentioned herein above the sulphur cement pre-composition can suitably be used to prepare a sulphur cement product. Reference herein to a sulphur cement product is to a sulphur cement or a sulphur cement-aggregate composite.

A sulphur cement typically refers to a composition comprising sulphur or modified sulphur and a filler. Usual sulphur cement fillers are particulate inorganic materials with an average particle size in the range of from 0.1 µm to 0.1 mm. The filler content of sulphur cement may vary widely, but is typically in the range of from 1 to 50 wt%, based on the total weight of the cement.

Sulphur cement-aggregate composites generally refer to a composite comprising both sulphur cement and a particulate inorganic material aggregate. Examples of sulphur cement-aggregate composites are sulphur mortar, sulphur concrete and sulphur-extended asphalt. Mortar comprises fine aggregate, typically with particles having an average diameter between 0.1 and 5 mm, for example sand. Concrete comprises coarse aggregate, typically with particles having an average diameter between 5 and 40 mm. Sulphur-extended asphalt is asphalt, i.e. typically aggregate with a binder that contains filler and a residual hydrocarbon fraction, wherein part of the binder has been replaced by sulphur, usually modified sulphur.

In the present process for preparation of sulphur cement product according to the invention, a sulphur cement product is prepared by admixing in step (a) at least a sulphur cement pre-composition according to the invention and a particulate inorganic material at a temperature at which sulphur is molten to obtain a molten sulphur cement product. In step (b), after the admixing step (a), the molten sulphur cement product is allowed to solidify. Typically, solidification takes place by allowing the molten sulphur cement product to cool down to a temperature below the melt temperature of sulphur.

In step (a), a particulate inorganic material is admixed with the sulphur cement pre-composition. In case of a process for the preparation of sulphur cement, the inorganic material is an inorganic filler. In the case the process for preparing a sulphur cement product is used for the preparation of a sulphur cement-aggregate composite, the particulate inorganic material may be filler and aggregate. The particulate inorganic material that is admixed with the sulphur cement pre-composition in step (a) may be any particulate inorganic material known to be suitable as sulphur cement filler or aggregate. Preferably, the particulate inorganic material that is admixed with the sulphur cement pre-composition in step (a) has oxide or hydroxyl groups on its surface. Examples of suitable particulate inorganic materials are silica, fly ash, limestone, quartz, iron oxide, alumina, titania, carbon black, gypsum, talc or mica, sand, gravel, rock or metal-silicates. Such metal silicates are for example formed upon heating heavy metal containing sludge in order to immobilise the metals. More preferably, the particulate inorganic material is a silica or a silicate. Examples of such silica or silicates are quartz, sand, metal-silicates (e.g. mica).

In the case that metal-silicates formed by heating sludge for heavy metal immobilisation are used as particulate inorganic material, the heat that is available in the heated sludge can advantageously be used in the sulphur cement product preparation process according to the invention. This can for example be done by using steam that is generated during cooling of the metal-silicates for heating the sulphur or the ingredients of the process according to the invention. Step (a) is carried out at a temperature at which sulphur is molten, i.e. typically above 120 °C, preferably in the range of from 120 to 150°C, more preferably in the range of from 125 to 140 °C. The conditions under which the particulate inorganic material is admixed with the sulphur cement pre-composition are preferably such that the organosilane comprised in the sulphur cement pre-composition is allowed to react with the inorganic material. The reaction time is typically in the range of from 20 minutes to 3 hours, preferably of from 30 minutes to 2 hours.

Sulphur, and optionally further ingredients such as particulate inorganic material, may be admixed with the sulphur cement pre-composition and the particulate inorganic material in step (a). Preferably, all ingredients of the sulphur cement product are admixed at a temperature at which sulphur is liquid. The sulphur cement pre-composition is admixed with the particulate inorganic material in such amounts that the molten sulphur cement product comprises polysulphide- containing organosilanes in the range of from 0.01 to 1 wt%, preferably of from 0.02 to 0.5 wt%, based on the total weight of sulphur cement product. If the polysulphide-containing organosilanes have reacted, sulphur cement pre-composition is admixed in such an amount that an equivalent number of silane groups are present.

The invention is further illustrated my means of the following non-limiting examples.

### Examples

### Comparative Example 1

A first crimp cap vial of twenty milliliters, with a magnetic stirrer was charged with 8.50 grams of sulfur pellets, capped, and placed in a heating block at 140°C. After melting the sulphur, water and oxygen were removed by purging the first vial with nitrogen for 5 minutes through the septum. The first vial was kept at 140°C. A second vial was then charged with 2 ml of a 2 wt% solution of bis(tri-ethoxysilylpropyltetrasulphide (TESPT) in styrene. The second vial was capped and subsequently purged with nitrogen. The second capped vial was heated to 140°C in a pre-heated aluminium heating block. After 15 minutes, 0.50 g of the heated solution was drawn from the second vial using a syringe, and injected into the first pre-heated vial containing the molten sulfur at 140°C. Simultaneously, 0.99 g of TESPT was injected through the septum. The mixture was then heated for another 15 minutes at 140°C. Thirty seconds before the end of the reaction, stirring was stopped to allow for possible phase separation. After a total of 15 minutes, the first vial was taken from the heating block and visually inspected for phase separation. The vial was then quenched to stop the reaction.

### Example 2 (according to the invention)

A crimp cap vial of twenty milliliters, with a magnetic stirrer was charged with 8.50 grams of sulphur pellets, capped, and placed in a heating block at 140°C. After melting the sulphur, water and oxygen were removed by purging the vial with nitrogen for 5 minutes through the septum. While continuously stirring, 0.50 grams of styrene and 0.01 grams of TESPT was injected into the pre-heated vial. After 15 minutes at 140°C, 0.99 grams of TEPST was injected into the vial through the septum, and the mixture was left to react for another 15 minutes at 140°C. Thirty seconds before the end of the reaction, stirring was stopped to allow for possible phase separation. After a total of 15 minutes, the vial was taken from the heating block and visually inspected for phase separation. The vial was then quenched to stop the reaction.

### Comparative Example 3

A crimp cap vial of twenty milliliters, with a magnetic stirrer was charged with 8.50 grams of sulphur pellets, capped, and placed in a heating block at 140°C. After melting the sulphur, water and oxygen were removed by purging the vial with nitrogen for 5 minutes through the septum. While continuously stirring, 0.01 grams of TESPT was injected into the pre-heated vial. After 15 minutes at 140°C, 0.99g of TEPST and 0.50 grams were injected into the vial through the septum, and the mixture was left to react for another 15 minutes at 140°C. Thirty seconds before the end of the reaction, stirring was stopped to allow for possible phase separation. After a total of 15 minutes, the vial was taken from the heating block and visually inspected for phase separation. The vial was then quenched to stop the reaction.

### Comparative Example 4

A crimp cap vial of twenty milliliters, with a magnetic stirrer was charged with 8.50 grams of sulphur pellets, capped, and placed in a heating block at 140°C. After melting the sulphur, water and oxygen were removed by purging the vial with nitrogen for 5 minutes through the septum. While continuously stirring, 0.50g of styrene injected into the pre-heated vial. After 15 minutes at 140°C, 1.00 grams of TEPST was injected into the vial through the septum, and the mixture was left to react for another 15 minutes at 140°C. Thirty seconds before the end of the reaction, stirring was stopped to allow for possible phase separation. After a total of 15 minutes, the vial was taken from the heating block and visually inspected for phase separation. The vial was then quenched to stop the reaction.

### Analyses of Example 2 and comparative Examples 1, 3 and 4

10 ml of CS₂ was injected into the vials and was left to dissolve at 55°C. 0.2 ml of the solution was added to 0.6 ml of CDCl₃ and analyzed by ¹H-NMR to determine the styrene conversion.

The results as obtained in Examples 1-4 are shown in Table 1.

**Tablet 1**

| | **First step: Reaction** | | | | **Second step: Reaction** | | | | **Analysis** | |
|---|---|---|---|---|---|---|---|---|---|---|
| | **(140°C, 15 min)** | | | | **(140°C, 15 min)** | | | | | |
| | TESPT | Styrene | Sulfur | | TESPT | Sulfur | Styrene | | Styrene conv. | Phase separa tion |
| | (wt%) | (wt%) | (wt%) | | (wt%) | (wt%) | (wt%) | | (%) | |
| Comp. Ex. 1 | 0.1 | 5.0 | - | | 9.9 | 85.0 | - | | 52 | No |
| Ex. 2 | 0.1 | 5.0 | 85.0 | | 9.9 | - | - | | 89 | No |
| Comp. Ex. 3 | 0.1 | - | 85.0 | | 9.9 | - | 5.0 | | 58 | No |
| Comp. Ex. 4 | - | .0 | 85.0 | | 10.0 | - | - | | 79 | No |

From Table 1 it is clear that the highest styrene conversion (89%) was obtained by adding 0.1wt% of TESPT to styrene and sulphur during the first step of the reaction (Example 2 in accordance with the present invention). This is the result of the catalytic influence of TESPT on the reaction between sulphur and styrene. In Comparative Example 4, no TESPT is present during the first reaction step and as a consequence, the overall styrene conversion (79%) is much lower than that in Example 2. It is further noted that pre-reacting TESPT and sulphur (Comparative Example 3) during the first step of the reaction seems to be slightly more preferred when compared with pre-reacting TESPT and styrene (Comparative Example 1). The overall styrene conversion for both reactions of Comparative Examples 1 and 3 is, however significantly lower than that obtained in accordance with the present invention (Examples 2). Moreover, in all cases, after reaction, a white/yellow emulsion was obtained, and no phase separation (within the observation period) was observed. In view of these results it will be clear that the process in accordance with the present invention constitutes a considerable improvement over Comparative Examples 1, 3 and 4 wherein the components for the sulphur cement pre-composition are mixed in a different sequence.

## Claims

1. A process for the preparation of a sulphur cement pre-composition comprising reacting sulphur modifier with polysulphide-containing organosilane to obtain in the presence of sulphur the sulphur cement pre-composition, wherein the organosilane has the general molecular formula:
(X₃Si)ₘH₍₂ₙ₊₁₋ₘ₎Cₙ-Sₐ-C_{n'}H_{(2-n'+1-m')} (SiX'₃)_{m'} (1)
wherein a is an integer in the range of from 2 to 8, X and X' each are, independently, a hydrolysable group, n and n' each are, independently, an integer in the range of from 1 to 4, and m and m' each are, independently, an integer in the range of from 1 to (2n+1).

2. Process according to claim 1, wherein (a) at least part of the sulphur is admixed with at least part of the polysulphide-containing organosilane and and at least part of the sulphur modifier.

3. Process according to claim 1 or 2, wherein polysulphide-containing organosilane is present in amount in the range of from of 0.05-1 wt%, based on the total weight of the sulphur cement pre-composition.

4. Process according to any one of claims 1-3, wherein sulphur modifier is present in amount in the range of from 0.01-0.2 wt%, based on the total weight of the sulphur cement pre-composition.

5. Process according to any one of claims 1-4, wherein sulphur is present in an amount of at least 90 wt%, based on the total weight of the sulphur cement pre-composition.

6. Process according to any one of claims 1-5, wherein the polysulphide-containing organosilane is bis(3-triethoxysilylpropyl) tetrasulphide.

7. Process according to any one of claims 1-6, wherein the sulphur modifier is styrene or a derivative thereof.

8. Process according to claim 7, wherein the sulphur modifier is α-methylstyrene.

9. A sulphur cement pre-composition obtainable by a process according to any one of claims 1-8.

10. A process for the preparation of a sulphur cement product comprising the following steps:
(a) admixing at least a sulphur cement pre-composition according to claim 9, and a particulate inorganic material at a temperature at which sulphur is molten to obtain a molten sulphur cement product; and
(b) solidifying the molten sulphur cement product.

11. Process according to claim 10, wherein in step (a) additionally sulphur is admixed.

12. Process according to claim 10 or 11, wherein the sulphur cement pre-composition is admixed with the particulate inorganic material in such an amount that the molten sulphur cement product comprises polysulphide-containing organosilanes in the range of from 0.01 to 0.5 wt %, based on the total weight of sulphur-aggregate composite.

13. A sulphur cement product obtainable by a process according to any one of claims 10-12.

14. The use of a sulphur cement pre-composition according to claim 9, in sulphur cement, sulphur mortar, sulphur concrete or sulphur-extended asphalt.
